Europäisches Patentamt

European Patent Office

Office européen des brevets

(11) Publication number: **0 494 606 A1**

# EUROPEAN PATENT APPLICATION

(21) Application number: **92100061.8**

(22) Date of filing: **03.01.92**

(51) Int. Cl.5: **G01C 21/20**

(30) Priority: **10.01.91 JP 1574/91**

(43) Date of publication of application:
**15.07.92 Bulletin 92/29**

(84) Designated Contracting States:
**DE FR GB**

(71) Applicant: **PIONEER ELECTRONIC
CORPORATION**
**No. 4-1, Meguro 1-chome**
**Meguro-ku Tokyo 153(JP)**

(72) Inventor: **Arakawa, Takeharu, c/o Pioneer
Elec. Corp.**
**Kawagoe Works, No. 25-1, Aza Nishi-machi**

Ohaza Yamada, Kawagoe-shi, Saitama(JP)
Inventor: **Araki, Morio, c/o Pioneer Electronic
Corp.**
Kawagoe Works, No. 25-1, Aza Nishi-machi
Ohaza Yamada, Kawagoe-shi, Saitama(JP)
Inventor: **Yamanaka, Kiyoshi, c/o Pioneer
Electronic Corp.**
Kawagoe Works, No. 25-1, Aza Nishi-machi
Ohaza Yamada, Kawagoe-shi, Saitama(JP)

(74) Representative: **Klingseisen, Franz, Dipl.-Ing.
et al**
Dr. F. Zumstein Dipl.-Ing. F. Klingseisen
Bräuhausstrasse 4
W-8000 München 2(DE)

(54) **Vehicle navigation display optionally showing auxiliary information visually associated with the main information.**

(57) An on-vehicle navigation apparatus displays auxiliary information. While a main picture containing map information, etc., is displayed, help information is written over the main picture (normal information picture) and the brightness of the main picture is made darker than the normal level when an auxiliary display command or a request for displaying help information has been made by a user's operation of a keyboard or the like. The help information will appear outstanding while keeping the main picture visible as the background screen. The driver can recognize the help information in visual association with the information on the main picture.

FIG.5

(a)

HELP KEY

(b)

SCALE

DISTANCE TO DESTINATION

VEHICLE

COVERED DISTANCE

AVERAGE VELOCITY

SCALE CIRCLE

## BACKGROUND OF THE INVENTION

### 1. Field of the Invention

The present invention relates to an on-vehicle navigation apparatus, and more particularly, to an on-vehicle navigation apparatus which displays a main picture including map information and the like on its image display unit (hereinafter simply called "display"), and superimposes an auxiliary picture for supplementing the main picture on the display.

### 2. Description of Background Information

Recently, on-vehicle navigation apparatuses have been put into practical use, which have map information stored in a memory, and configured to read out the map information therefrom, and display it together with the current position of the vehicle on a display to navigate the vehicle to a given destination.

In such navigation apparatuses, in order to avoid a driver's visual confusion while the vehicle is running and ensure easy and accurate recognition of such information, it is general that the navigation apparatus usually presents limited display of information required in normal driving, and displays information which is not particularly necessary in normal driving, only when requested by a user, e.g. the driver or the like. In other words, the conventional apparatuses are designed to have a main picture which includes only limited information, such as map information, which is displayed during normal driving, and an auxiliary picture which displays specific information when requested to supplement the main picture, and to be able to switch between the two pictures or simply overwrite the main picture by an auxiliary picture. The auxiliary picture to supplement the main picture, or a so-called help picture starts displaying its help information upon reception of an operation signal or upon depression of a help key serving as an input device. With the conventional apparatuses, however, the help picture is displayed as a picture entirely different from the main picture, so that even when the help picture is called during normal driving. Consequently, the driver finds difficulty in comprehending the help information in association with the help information with the information on the main picture.

## SUMMARY OF THE INVENTION

The present invention has been made to solve the above problems and, it is therefore an object of the present invention to provide an on-vehicle navigation apparatus which can permit a driver to apprehend help information to be presented on a display in association with information on a main picture with a simple structure, without interfering with the driver's normal driving operation.

An on-vehicle navigation apparatus according to the present invention comprises image information data generating means for generating main image information data according to driving of a vehicle; display means for displaying a two-dimensional picture corresponding to the main image information data; means for generating an auxiliary display command; means for superimposing auxiliary information data on the main image information data in response to the auxiliary display command; and a brightness control means for reducing brightness of an image of the main image information data in response to the auxiliary display command.

When an auxiliary display command, namely a help-information display request is made by a user's operation of a keyboard or the like, the on-vehicle navigation apparatus embodying the present invention overwrites help information on the main picture and sets the main picture darker than the normal brightness.

## BRIEF DESCRIPTION OF THE DRAWINGS

Fig. 1 is a block diagram illustrating the structure of an on-vehicle navigation apparatus according to the present invention;

Fig. 2 is a block diagram illustrating the structure of a display device in the on-vehicle navigation apparatus according to the present invention;

Fig. 3 is a diagram exemplifying the contents of a color palette in Fig. 2;

Fig. 4 is a flowchart showing basic operational procedures for the display device which a CPU will execute in the arrangement shown Figs. 1 and 2; and

Fig. 5 is a diagram showing a display picture of help information according to the present invention.

## DETAILED DESCRIPTION OF THE PREFERRED EMBODIMENT

A preferred embodiment of the present invention will now be described in detail referring to the accompanying drawings.

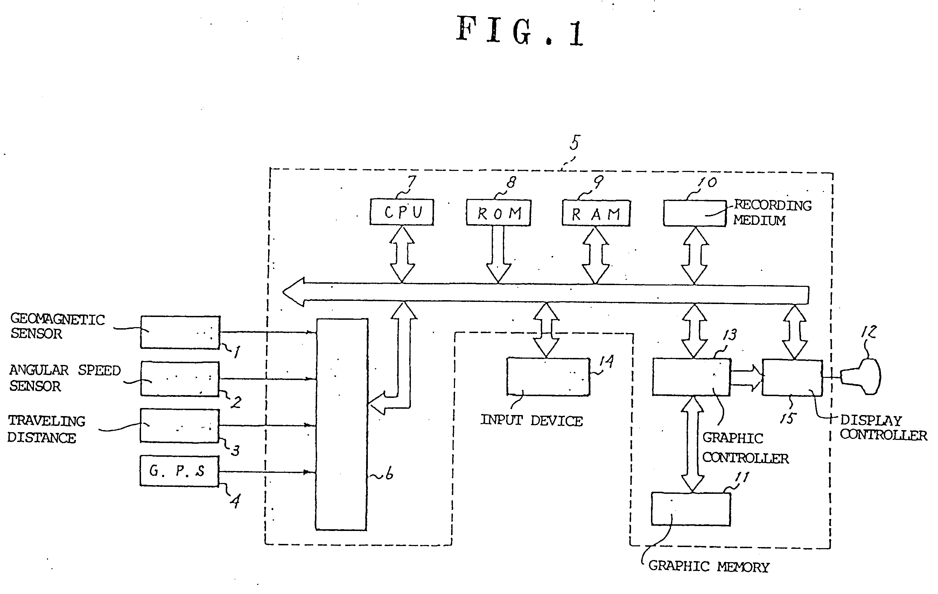

Fig. 1 presents a block diagram illustrating the structure of an on-vehicle navigation apparatus according to the present invention. A geomagnetic sensor 1 outputs azimuth data of a vehicle based on geomagnetism (geomagnetic field), an angular speed sensor 2 detects the angular speed of the vehicle, a traveling distance sensor 3 detects the traveling distance of the vehicle, and a GPS (Global Positioning System) device 4 detects the current position of the vehicle, etc. using latitude and longitude information. The outputs from these sensors and device are to be supplied to a system controller 5.

The system controller 5 includes an interface 6, a CPU (Central Processing Unit) 7, a ROM (Read Only Memory) 8, a RAM (Random Access Memory) 9, a recording medium 10, a graphic memory 11, a graphic controller 13 and a display controller 15. The interface 6 receives the outputs from the sensors and the device 1 to 4, and perform A/D (Analog to Digital) conversion, i.e. it converts the analog data into digital data. The CPU 7 executes various image data processes, and computes the traveling distance of the vehicle, etc. based on the data from the sensors 1 to 3 and the GPS device 4 that is sent piece by piece from the interface 6. The ROM 8 has various processing programs for the CPU 7 and other necessary information previously written therein. The RAM 9 is accessed so that information necessary for executing the programs will be written there or read out therefrom. The recording medium 10 is constituted by a so-called CD-ROM or IC card, where digitized (numerical) map information is recorded. The graphic memory 11 constituted by a V-RAM (Video RAM) or the like temporarily holds image information to be displayed. The graphic controller 13 draws map data or the like sent from the CPU 7 in the graphic memory 11 and outputs that data as image information. The display controller 15 controls a display 12, such as a liquid crystal display device or a CRT, in accordance with the image information from the graphic controller 13. An input device 14, such as a keyboard, sends various commands to the system controller 5 according to the key entry by a user.

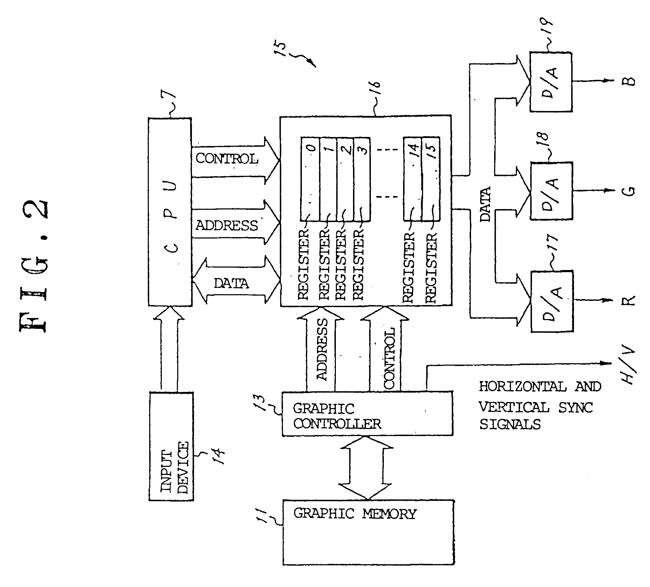

Fig. 2 is a block diagram exemplifying a display device in the on-vehicle navigation apparatus according to the present invention. The same reference numerals are used to denote those elements in Fig. 2 corresponding or identical to what is shown in Fig. 1. The display controller 15 which controls the display 12 includes a two-port RAM 16 having color palette registers and D/A (Digital to Analog) converters 17 to 19 which convert the data sent from the two-port RAM 16 into analog data.

The input device 14 has a help key for requesting help information to be displayed. By depressing the help key, a help command signal is sent to the CPU 7. In response to the help command signal from the input device 14, the CPU 7 controls to rewrite the contents of the registers of the color palette in the two-port RAM 16 of the display controller 15. The graphic controller 13 outputs drawing data written in the graphic memory 11, in the TTL level, together with a horizontal sync signal, a vertical sync signal and a dot clock.

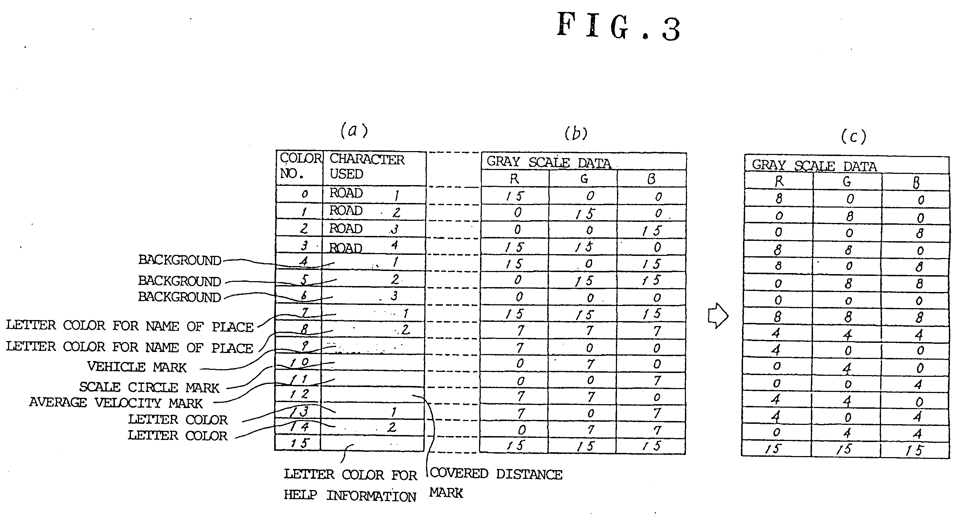

The palette registers in the two-port RAM 16 include 16 registers 0 to 15. For each register a color (color number) and the associated display character are determined, as shown in a part (a) in Fig. 3. Every color is represented by a combination of the three primary colors, R (red), G (green) and B (blue), as shown in a part (b) in Fig. 3, and further the individual primary color can have the desired intensity or gray scale data prepared by 16 brightness levels, "0" to "15". The level "0" in Fig. 3 denotes a pedestal level, and "15" 100% brightness. Black color represented by the register 6 is one of the background colors of the display 12.

The contents of each pallet register are to be rewritten into two types under the control of the CPU 7: one for a normal display mode as shown in the part (b) in Fig. 3 and one for a help information display mode as indicated in a part (c) in the diagram. For the normal display shown in the part (b) the individual primary colors are set as gray scale data by a combination of three levels of brightness, "0", "15" and "7", the last value being approximately a half the second value. For the help information display shown in the part (c), the gray scale data is set by a combination of three values "0", "8" and "4" which are about halves of the respective brightnesses in the normal display shown in the part (b), except for the contents of the register 15 for help characters.

The operation of the display device with the above structure will be described below.

The graphic controller 13 outputs 4-bit data together with a horizontal sync signal, a vertical sync signal and a dot clock based on a drawing data written in the graphic memory 11. In the 2-port RAM 16 the register 0 is accessed to output its data when the value of the 4-bit data from the graphic controller 13 is "0", and the other registers will likewise be accessed corresponding to the other values of the 4-bit data, namely "1", "2" ..., "15". The RAM 16 therefore outputs gray scale data in association with the values of the 4-bit data.

Each pallet register has a 12-bit configuration, and sends out its contents or gray scale data of each 4 bits at a time to the D/A converters 17 to 19 through the data bus in synchronism with the dot clock. The D/A converters 17 to 19, as already described, are designed so that its output assumes a pedestal level and a white peak level when their data are "0" and "15", respectively. The individual analog outputs acquired serve to control the driving of the display 12 in association with the three primary colors of R, G and B.

In normal display mode where only the main picture is to be presented on the display, or when a help command signal from the input device 14 has not reached yet, the CPU 7 sets the gray scale data for the normal display mode as shown in the part (b) in Fig. 3 in the individual pallet registers in the 2-port RAM 16 through the data bus, address bus and control bus, or controls those registers to hold their contents.

When the display of help information is requested and the help command signal from the input device 14 becomes active, the CPU 7 sets the gray scale data as shown in (c) in Fig. 3 in the individual pallet registers, the gray scale data reflecting reduced brightnesses except for the color number 15.

The brightnesses of colors to be displayed on the display 12 can be altered without rewriting the data of the graphic memory 11 by rewriting the contents of the color pallet registers in accordance with the help command signal from the input device 14 under the control of the CPU 7. Instead of rewriting the contents of the color pallet registers, two types of registers as illustrated in (b) and (c) in Fig. 3 may be prepared so that they may be selectively switched one from another to change the brightness of the target display color.

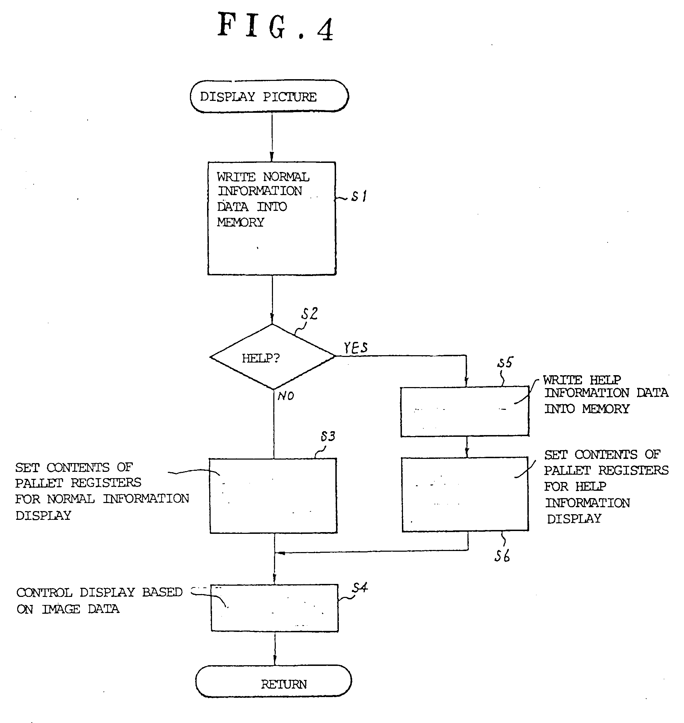

The basic procedures for causing the display device to present a picture, which are executed under the control of the CPU 7, will now be explained with reference to the flowchart given in Fig. 4.

First, when a picture display routine is called in the main routine (not shown), the CPU 7 reads out map information containing roads and the names of places around the current location of the vehicle from the recording medium 10, and writes it as drawing data in the graphic memory 11 via the graphic controller 13. In addition to the map information, various other pieces of information, such as the vehicle mark, running locus, routes and covered distance, computed based on the information acquired from the individual sensors 1-3 and the GPS device 4, are also read out from the RAM 9 and are overwritten on the drawing data originating form the map information (step S1).

Then, based on the status of the help command signal from the input device 14, whether or not display of the help information has been requested is determined (step S2). If no such request has been made yet, the CPU 7 sets the contents of the pallet registers to the gray scale data for the normal display mode (part (b) in Fig. 3) (step S3).

After the display device 12 becomes ready, the CPU 7 instructs the graphic controller 13 to transfer drawing data to be displayed from the graphic memory 11. The gray scales of the transferred drawing data are determined according to the contents of the pallet registers in the RAM 16, which have been set in the previous step S3, and is sent together with the horizontal sync signal, vertical sync signal and dot clock as inputs to the D/A converters 17 to 19, thereby controlling the driving of the display device 12 (step S4).

A sequence of operations for the normal picture display is as described above.

When judging in step S2 that a request of displaying help information has been made, the CPU 7 reads out predetermined help information from the ROM 8, or RAM 9 or recording medium 10 and overwrites it in a memory area in the graphic memory 11 where the normal information data has been written as done in step S1, or specifies help information data, prepared in advance, as drawing data (step S5).

Then the CPU 7 sets the contents of the pallet registers to the gray scale data for the help information display (part (C) in Fig. 3) (step S6).

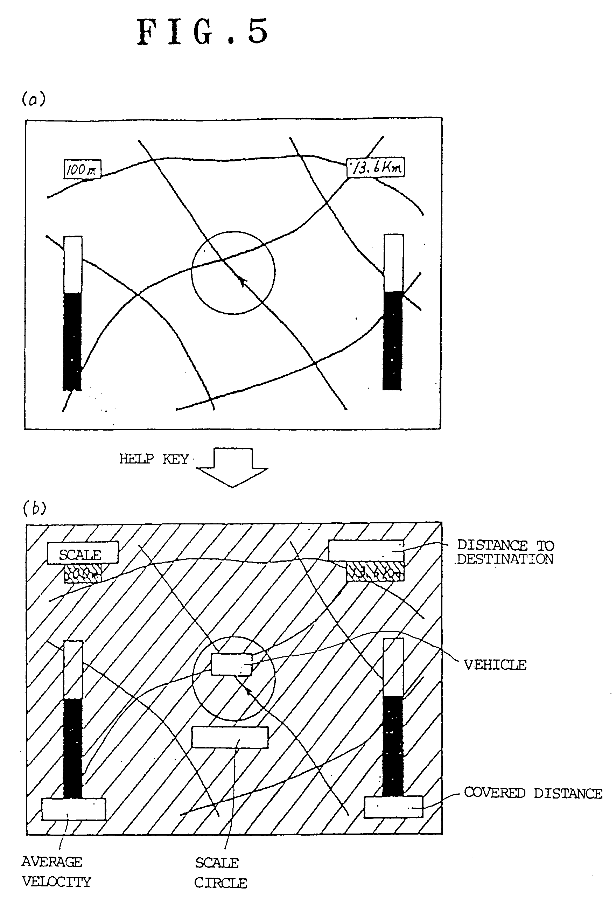

Then, the flow moves to step S4 and the display device 12 is controlled to be driven based on this gray scale data as already described. The gray scale data set here has gray scale tones (brightnesses) each of which is about a half of the associated tone in the normal information display mode, except for that of the help information characters. When this gray scale data information is displayed on the help picture, therefore, such a help information display picture will be acquired that causes help information characters to appear outstandingly as shown a part (b) of Fig. 5 with respect to the normal display picture in a part (a) of Fig. 5. The background display portion (hatched portion) simply has its brightness lowered and retains its display conditions for the drawing information without significantly changing the visual imaging.

After the help key is operated, clear display of, for example, "scale" (help information characters) allows the supplemental explanation of "100 meters" at a slightly darker level, which is normal information before the depression of the help key, to be easily and accurately given.

Although the brightness of the target display color is switched in two levels in accordance with the status of the help command signal from the input device 14 in the above embodiment, this switching is not restrictive so that three or more types of help information may be selectively displayed according to the intended mode. Alternatively, the gray scale of the display color may be changed according to the brightness in the vehicle as proposed in Japanese Patent Application No. 61-259225 filed previously. This helps the driver discriminate the information visually, and presents a more effective means.

Although all the brightnesses for the help information display mode, except for those of the help information characters, are set approximately halves of the respective brightnesses of the gray scale data for the normal information display mode, the values of the individual pieces of gray scale data for the help information display may be set to the same value, presenting a monotonous background screen.

Further, while a request for display of help information is made to the CPU 7 by a key input through the input device 14 according to the above embodiment, a timer may be used so that the request can be made to the CPU 7 upon each passage of a given time, or the request may be made immediately after the engine of the vehicle is activated.

In short, according to this invention, since the help information can be displayed over the main picture and at the same time the brightness of the main picture is dropped in accordance with a request for display of help information, the help information will appear outstandingly while keeping the main picture visible as the background screen. Accordingly, it is particularly convenient that the driver can recognize the help information in visual association with the information on the main picture.

## Claims

1. An on-vehicle navigation apparatus comprising:
   image information data generating means for generating main image information data in response to driving of a vehicle;
   display means for displaying a two-dimensional picture corresponding to the main image information data;
   means for generating an auxiliary display command;
   means for superimposing auxiliary information data on the main image information data in response to the auxiliary display command; and
   brightness control means for reducing brightness of an image of the main image information data in response to the auxiliary display command.

2. An apparatus according to claim 1, wherein the brightness control means includes:
   a high-brightness color pallet and a low-brightness color pallet for determining a correlation between input image data and gray scale data;
   select means for selecting the high-brightness color pallet when no auxiliary display command is present, and selecting the low-brightness color pallet when the auxiliary display command is present; and
   processing means for processing the main image information data with the selected color pallet.

# FIG.1

GEOMAGNETIC SENSOR — 1

ANGULAR SPEED SENSOR — 2

TRAVELING DISTANCE — 3

G.P.S — 4

CPU 7  ROM 8  RAM 9  RECORDING MEDIUM 10

5

~6

INPUT DEVICE 14

GRAPHIC CONTROLLER 13

DISPLAY CONTROLLER 15

12

GRAPHIC MEMORY 11

EP 0 494 606 A1

# FIG. 2

INPUT DEVICE ~14

C P U ~7

DATA   ADDRESS   CONTROL

GRAPHIC MEMORY ~11

GRAPHIC CONTROLLER ~13

ADDRESS

CONTROL

REGISTER ~ 0
REGISTER ~ 1
REGISTER ~ 2
REGISTER ~ 3

REGISTER ~ 14
REGISTER ~ 15

~15

~16

HORIZONTAL AND VERTICAL SYNC SIGNALS

DATA

D/A ~17   D/A ~18   D/A ~19

H/V   R   G   B

EP 0 494 606 A1

FIG. 3

# F I G . 4

DISPLAY PICTURE

WRITE NORMAL INFORMATION DATA INTO MEMORY — S1

S2 HELP?

YES

S5 WRITE HELP INFORMATION DATA INTO MEMORY

NO

SET CONTENTS OF PALLET REGISTERS FOR NORMAL INFORMATION DISPLAY — S3

SET CONTENTS OF PALLET REGISTERS FOR HELP INFORMATION DISPLAY — S6

CONTROL DISPLAY BASED ON IMAGE DATA — S4

RETURN

# FIG.5

(a)

HELP KEY

(b)

DISTANCE TO DESTINATION

VEHICLE

COVERED DISTANCE

AVERAGE VELOCITY

SCALE CIRCLE

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 406 946 (N.V. PHILIPS GLOEILAMPENFABRIEKEN) * abstract * * column 4, line 25 - line 35; figures 2,3 * | 1 | G01C21/20 |
| A | EP-A-0 306 088 (N.V. PHILIPS GLOEILAMPENFABRIEKEN) * abstract; figure 3 * * column 5, line 40 - line 47 * | 1 | |
| A | PATENT ABSTRACTS OF JAPAN vol. 13, no. 389 (P-925)(3737) 29 August 1989 & JP-A-1 138 409 ( SUMITOMO ELECTRIC IND LTD. ) 31 May 1989 * abstract * | 1 | |
| A,D | US-A-4 965 574 (FUKUSHIMA ET AL.) * abstract * | 1 | |
| | | | TECHNICAL FIELDS SEARCHED (Int. Cl.5) |
| | | | G01C G01D G08G G06F |

The present search report has been drawn up for all claims

| Place of search | Date of completion of the search | Examiner |
|---|---|---|
| THE HAGUE | 20 MARCH 1992 | HOEKSTRA F. R. |